# EUROPÄISCHE PATENTSCHRIFT

(11) **EP 3 404 804 B1**
(45) Veröffentlichungstag und Bekanntmachung des Hinweises auf die Patenterteilung: **30.09.2020**
(21) Anmeldenummer: 18168917.5
(22) Anmeldetag: 24.04.2018
(51) Int. Cl.: H02K 1/27, H02K 1/14, H02K 29/03

(54) **ELEKTRISCHER ANTRIEBSMOTOR MIT VERRINGERTER GERÄUSCHENTWICKLUNG SOWIE DIESEN ENTHALTENDES HAUSHALTSGERÄT**
ELECTRIC DRIVE MOTOR WITH REDUCED NOISE GENERATION AND HOUSEHOLD APPLIANCE CONTAINING SAME
MOTEUR D'ENTRAÎNEMENT ÉLECTRIQUE PRODUISANT PEU DE BRUIT AINSI QU'APPAREIL ÉLECTROMÉNAGER COMPORTANT UN TEL MOTEUR D'ENTRAÎNEMENT ÉLECTRIQUE PRODUISANT PEU DE BRUIT

(30) Priorität: 17.05.2017 DE 102017208280
(43) Veröffentlichungstag der Anmeldung: 21.11.2018
(73) Patentinhaber: BSH Hausgeräte GmbH, 81739 München (DE)
(72) Erfinder: Bork, Christoph, 10249 Berlin (DE); Hahn, Kevin, 14548 Schwielowsee (DE); Walter, Axel, 14621 Schönwalde-Glien (DE)

(56) Entgegenhaltungen:
- EP-A1- 2 600 498
- WO-A1-2016/170624
- WO-A2-2014/082839
- DE-A1-102013 213 554
- DE-A1-102013 226 379
- DE-U1-202016 104 036
- JP-A- 2009 189 163
- US-A1- 2003 048 017

## Beschreibung

Die Erfindung betrifft einen elektrischen Antriebsmotor, enthaltend einen Stator und einen Permanentmagnetenrotor, der eine Motorwelle und ein auf der Motorwelle sitzendes Blechpaket aufweist, wobei Stator und Permanentmagnetenrotor durch einen Luftspalt voneinander getrennt sind, ein diesen Antriebsmotor enthaltendes Haushaltsgerät und Verfahren zu seiner Ermittlung und seinem Betrieb.

Elektrische Antriebsmotoren, insbesondere BLDC-Motoren, werden häufig in Haushaltsgeräten eingesetzt. Die dabei eingesetzten elektrischen Antriebsmotoren sollen einen definierten Leistungs- bzw. Drehzahl-Drehmoment-Bereich abdecken. Außerdem sollen wichtige Anwendungseigenschaften wie die Leistungsdichte sowie die Geräuschentwicklung verbessert werden.

Im Stand der Technik sind verschiedene elektrische Antriebsmotoren bekannt, die insbesondere auch in Haushaltsgeräten eingesetzt werden können.

Die Veröffentlichung WO 2016/026831 A1 beschreibt einen Rotor für eine elektrische Maschine eines Haushaltsgerätes, mit einer Vielzahl von Permanentmagneten, welche in Umfangsrichtung des Rotors mit abwechselnder Polung verteilt angeordnet und in tangentialer Richtung magnetisiert sind, und einem Rotorpaket, welches aus einem magnetisch leitfähigen Material gebildet ist, wobei das Rotorpaket eine Mehrzahl von Durchgangsöffnungen aufweist, welche sich in axialer Richtung des Rotors erstrecken und welche in Umfangsrichtung des Rotors beabstandet zueinander verteilt angeordnet sind, wobei in den Durchgangsöffnungen die Permanentmagnete derart angeordnet sind, dass ein von dem jeweiligen Permanentmagneten ausgehender magnetischer Fluss in tangentialer Richtung des Rotors verläuft, wobei zwischen benachbarten Durchgangsöffnungen jeweils ein Segment des Rotorpakets ausgebildet ist, welches zur Konzentration des magnetischen Flusses der jeweiligen Permanentmagnete in einem Luftspalt der elektrischen Maschine ausgebildet ist, und wobei die Permanentmagnete im Vergleich zu dem Rotorpaket in axialer Richtung des Rotors eine größere Erstreckung aufweisen.

Die Veröffentlichung WO 2014/082839 A2 beschreibt einen permanentmagnetischen Spoke-Rotor, der den rotierenden Teil eines elektrischen Motors innerhalb eines Stators bildet und einen Luftspalt zwischen der inneren Oberfläche des Stators und sich selbst hat, umfassend einen zylindrischen ferromagnetischen Kern, einen Schaft, welcher die Rotationsachse davon bildet, eine Nabe, welche im Zentrum des Kerns angeordnet ist und die ein Schaftloch hat, welches den Schaft trägt, mehr als ein Polsegment, welche um die Nabe herum angeordnet sind, mehr als eine Magnetaussparung zwischen den Polsegmenten, mehr als einen Magneten, welche in den Magnetaussparungen angeordnet sind und sich nach außen in radialer Richtung erstrecken, und zwei Endringe aus einem nichtmagnetischen Material, welche auf der vorderen und hinteren planaren Oberfläche des Kerns mittels eines Spritzgussverfahrens hergestellt werden. Die Magnete, deren Länge in axialer Richtung größer ist als die Länge der Magnetaussparungen, sind in die Endringe eingebettet.

Das Auftreten von Geräuschen beim Betrieb eines elektrischen Antriebsmotors kann entweder verhindert oder zumindest reduziert werden, wenn entweder die Ursache oder der Ausbreitungsweg geeignet beeinflusst werden. Eine Ursache von Geräuschen sind Drehmomentschwankungen. Generell können Drehmomentschwankungen eines elektrischen Antriebsmotors durch eine Aufweitung oder zumindest eine geeignete Gestaltung des Luftspaltes reduziert werden. Bekannt ist in diesem Zusammenhang die sogenannte "flower shape". Damit ist aber in der Regel eine Reduzierung der Leistungsdichte verbunden.

Überdies ist es bekannt, Schwingungen zu beeinflussen, indem das Frequenzverhalten des Gesamtsystems verändert wird. Das kann beispielsweise durch Dämpfungselemente oder Versteifungen (Wandstärken, Umspritzung mit Kunststoffen usw.) erreicht werden.

Der zeitliche Verlauf des Drehmomentes eines elektrischen Antriebsmotors ist auch bei konstantem Lastmoment immer mit Harmonischen beaufschlagt. Diese können unterschiedliche Ursachen haben (Nutrastmoment, ein nicht ideales Luftspaltfeld zwischen Stator und Rotor, ein nicht idealer eingeprägter elektrischer Strom). In jedem Fall erhöhen sie das Risiko der Anregung von unerwünschten Geräuschen. Das kann je nach Frequenzbereich und dem Verhalten des schwingfähigen Systems, in dem sich der elektrische Antriebsmotor befindet, problematisch sein, insbesondere bei Resonanzfrequenzen. Es ist daher wünschenswert, bestimmte Harmonische des Drehmomentes des elektrischen Antriebsmotors zu reduzieren oder vollständig zu unterdrücken.

Bestimmte Harmonische können durch die Auswahl einer geeigneten Topologie (z.B. Nut-Pol-Zahl-Kombination) reduziert oder ausgeschlossen werden. Die Auswahl einer hinsichtlich der Geräuschentwicklung günstigen Topologie ist aber oft mit anderen Nachteilen verbunden, so dass sie häufig nicht zur Anwendung kommen kann. Weitere mögliche Ursachen für Geräusche sind z.B. radiale Kräfte zwischen Rotor und Stator, Unwuchten oder Lagervibrationen.

Im Stand der Technik hat man sich bereits mit der Reduzierung von Harmonischen befasst, um Drehmomentschwankungen zu verringern und damit zu einer geringeren Geräuschentwicklung bei einem elektrischen Antriebsmotor beizutragen.

Die Veröffentlichung EP 2 104 208 A2 beschreibt einen Motor, umfassend einen Rotor, der einen geformten Pol hat, der wirkt, um Nutrasten ("cogging torque") und Harmonische der elektromotiven Kraft zu minimieren; einen Stator mit Zahnelementen, wobei die Zahnelemente Endteile enthalten, die teilweise Aussparungsöffnungen mit einer ersten Dimension definieren und eine Kerböffnung, welche durch die Endteile definiert ist, mit einer zweiten Dimension. Die Kerböffnungen sind vorzugsweise zirkular gestaltet. Diese Erfindung sollte ein Motorsystem bereitstellen, das Drehmomentschwankungen minimiert, welche aufgrund von Schwingungen und Lärm die Leistungsfähigkeit eines Motor herabsetzen können.

Die Veröffentlichung US 7,417,347 B2 beschreibt einen BLDC-Motor vom Skelett-Typ, welcher durch Reduktion des Nutrastens das Resonanzgeräusch reduziert. Der BLDC-Motor umfasst einen Rotor mit einer elliptisch-zylindrischen Gestalt, umfassend einen elliptisch-zylindrisch gestalteten Magneten mit einem Nordpol und einem Südpol, welche durch eine Trennungsebene und einen Magnetrahmen, welcher an der inneren Umfangsfläche des Magneten befestigt ist, getrennt sind, worin ein rotierender Schaft an einem Zentrum des Magnetrahmens befestigt ist und ein Durchmesser des Rotors an Punkten, an denen die Trennungsebene einen äußeren Durchmesser des Rotors schneidet, kleiner ist als ein Durchmesser des Rotors an allen anderen Punkten entlang des äußeren Umfangs des Rotors, um das Resonanzgeräusch aufgrund eines höheren Grades an Nutrasten zu minimieren.

Die Veröffentlichung DE 10 2013 213 554 A1 beschreibt eine elektrische Permanentmagnet-Rotationsmaschine mit einem Stator, der einen Statorkern und eine Wicklung einschließt, die um einen Zahnbereich des Statorkerns gewickelt ist; einem Rotor, der drehbar in Bezug auf den Stator mit einem Spalt angeordnet ist und in welchem ein Rotorkern und mehrere Permanentmagnete mit unterschiedlichen Polen in einer Umfangsrichtung abwechselnd angeordnet sind; und einer Nut, die in einer Oberfläche des Rotorkerns vorgesehen ist, wobei die Oberfläche dem Stator in einer ungefähr symmetrischen Weise um eine Mittellinie des Permanentmagneten in der Umfangsrichtung zugewandt ist. In der Ausführungsform von Fig. 14 sind Nuten in den einander gegenüberliegenden Oberfläche von sowohl dem Rotorkern als auch dem Stator angeordnet.

Die Veröffentlichung DE 10 2013 226 379 A1 beschreibt einen Speichenrotor für eine elektrische Maschine, mit einem Grundkörper, der sich konzentrisch um eine Drehachse erstreckt, und der eine Vielzahl Polschuhe aufweist, zwischen denen Dauermagnete in Aufnahmen angeordnet sind, wobei für jeden Dauermagneten in seiner Aufnahme jeweils zumindest ein erstes Klemmelement und ein zweites Klemmelement vorgesehen sind, die ihn in seiner Aufnahme fixieren. Das erste Klemmelement fixiert den Dauermagneten in einer radialen Richtung zur Drehachse, und das zweite Klemmelement fixiert ihn in einer tangentialen Richtung zur Drehachse, wobei für jedes zweite Klemmelement jeweils zudem ein Bewegungsfreiraum vorgesehen ist. Die Dauermagnete können in ihrer Aufnahme positioniert und durch Einspritzen eines Thermoplastes, eines Duromers oder eines anderen Kunststoffes befestigt sein.

Die Veröffentlichung US 2003/0048017 A1 beschreibt einen Permanentmagneten-Rotor, umfassend einen Rotor mit einer Vielzahl von magnetischen Dipolen, die in einem Abstand voneinander in einer peripheren Richtung des Rotors angeordnet sind; und einen Stator mit einer Vielzahl von magnetischen Pol-Stücken, die in einem Abstand in der peripheren Richtung angeordnet sind, wobei die magnetischen Pol-Stücke gegenüber der Vielzahl der magnetischen Pole des Rotors angeordnet sind. Eine Oberfläche jedes der magnetischen Pol-Stücke des Stators, die den magnetischen Polen des Rotors gegenüberliegen, beinhaltet eine zusätzliche Nut.

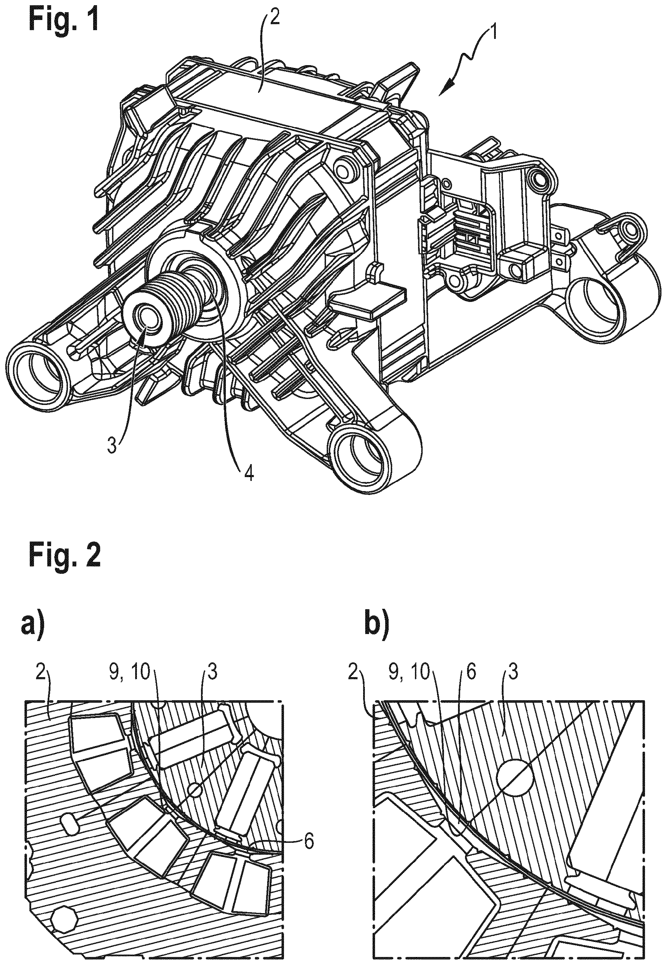

Die Veröffentlichung EP 26 00 498 A1 beschreibt einen Rotor für einen Elektromotor, umfassend: eine Rotorwelle; und einen Rotorkern, bei dem eine Vielzahl von Polen, die jeweils aus einem Paar von ersten Permanentmagneten, die V-förmig zu einer Außenumfangsseite offen angeordnet sind, und einem zweiten Permanentmagneten zusammengesetzt sind, der parallel zu einer Umfangsrichtung in einem offenen Abschnitt der V-Form angeordnet ist, in der Umfangsrichtung angeordnet sind. Die Permanentmagneten ändern abwechselnd ihre Polaritäten. Es ist eine Nut gebildet ist, die eine Nutmitte in einem Bereich aufweist, der sich von einem Basispunkt erstreckt, der an einer elektrischen Winkelposition, die um einen 1/4-Zykus einer harmonischen Komponente einer Drehmomentwelligkeit zu einer d-Achse hin von einer Trennlinie verschoben ist, die zwischen einer Linie, die einen rotoraußenumfangsseitigen Eckenbereich des zweiten Permanentmagneten und die Rotorwellenmitte verbindet, und einer q-Achse aus einer Vielzahl von Trennlinien angeordnet ist, die eine Vielzahl von Teilungspunkten verbinden, die auf ein elektrisches Winkelintervall festgelegt sind, das einem Zyklus der harmonischen Komponente von der d-Achse zur q-Achse am Rotorkernaußenumfang und der Rotorwellenmitte bis zu einer um einen 1/8 Zyklus verschobenen elektrischen Winkelposition der harmonischen Komponente zur q-Achse hin vom Basispunkt entspricht. Die Fig. 1 illustriert, wie eine Nut 40 auf der äußeren Peripherie des Rotorkerns 20 gebildet ist. Die Figuren 2 bis 4 zeigen verschiedene Querschnittsformen der Nut.

Vor diesem Hintergrund war es Aufgabe der vorliegenden Erfindung, einen elektrischen Antriebsmotor, insbesondere einen bürstenlosen Gleichstrommotor (BLDC-Motor), mit einer verringerten Geräuschentwicklung bereitzustellen. Außerdem soll ein Haushaltsgerät bereitgestellt werden, welches diesen elektrischen Antriebsmotor enthält sowie ein Verfahren zu seinem Betrieb.

Die Lösung dieser Aufgabe wird nach dieser Erfindung erreicht durch einen elektrischen Antriebsmotor, ein diesen elektrischen Antriebsmotor enthaltendes Haushaltsgerät sowie Verfahren zu seiner Ermittlung und seinem Betrieb mit den Merkmalen der entsprechenden unabhängigen Patentansprüche. Bevorzugte Ausführungsformen des erfindungsgemäßen elektrischen Antriebsmotors sind in den abhängigen Patentansprüchen aufgeführt. Bevorzugten Ausführungsformen des erfindungsgemäßen elektrischen Antriebsmotors entsprechen bevorzugte Ausführungsformen des erfindungsgemäßen Haushaltsgeräts und der Verfahren zu seiner Ermittlung und seinem Betrieb, auch wenn dies hierin nicht explizit festgestellt ist.

Gegenstand der Erfindung ist somit ein elektrischer Antriebsmotor, enthaltend einen Stator und einen Permanentmagnetenrotor, der eine Motorwelle und ein auf der Motorwelle sitzendes Blechpaket aufweist, wobei Stator und Permanentmagnetenrotor durch einen Luftspalt voneinander getrennt sind, und wobei Stator und Permanentmagnetenrotor auf ihren dem Luftspalt zugewandten Oberflächen in Umfangsrichtung jeweils v voneinander gleich beabstandete Rastpositionen aufweisen, welche jeweils durch Vertiefungen in den Oberflächen realisiert sind, wobei die Anzahl v an Rastpositionen auch Nutschlitze umfasst, an denen keine Einkerbungen möglich sind, und die Vertiefungen kugelförmig oder konisch sind. Da der Luftspalt aus technischen Gründen meistens in Hinblick auf eine möglichst geringe Breite optimiert ist, sind die Rastpositionen erfindungsgemäß jeweils durch Vertiefungen realisiert.

Die Vertiefungen, d.h. lokale Aufweitungen des Luftspaltes, sind erfindungsgemäß kugelförmig, insbesondere halbkugelförmig, oder konisch. Erfindungsgemäß ist es ganz besonders bevorzugt, dass die Rastpositionen konische Vertiefungen sind.

Wo konstruktiv keine Einkerbungen möglich sind, z.B. in einem Nutschlitz, können sie wie erwähnt ausgelassen werden. Die Anzahl v an Rastpositionen umfasst dann auch die Nutschlitze. Da sich die Phasenlage der erzwungenen Harmonischen im Zusammenspiel zwischen Stator und Permanentmagnetenrotor ergibt, kommt es auf die absolute Position der Rastpositionen, d.h. der Vertiefungen, nicht an. Vielmehr ist die Lage der Vertiefungen auf dem Rotor und auf dem Stator zueinander ausschlaggebend. Dies wird erfindungsgemäß dadurch realisiert, dass die Zahl v der Rastpositionen für Stator und Permanentmagnetenrotor gleich ist.

In einer besonders bevorzugten Ausführungsform der Erfindung, welche insbesondere für die Erzeugung einer gegenphasigen 48ten Harmonischen geeignet ist, ist v gleich 48, so dass die Rastpositionen entlang eines im Wesentlichen kreisförmigen Perimeters der Oberflächen im Abstand von 7,5° eingebracht sind.

Die Erfindung ist im Prinzip auf beliebige elektrische Antriebsmotoren anwendbar, besonders bevorzugt aber auf elektrische Antriebsmotoren, welche in Haushaltsgeräten verwendbar sind. Der elektrische Antriebsmotor ist ganz besonders bevorzugt ein bürstenloser Gleichstrommotor, d.h. ein BLDC-Motor.

Die Breite des Luftspaltes wird im Allgemeinen durch verschiedene Faktoren bestimmt. Dabei ist im Allgemeinen aufgrund der Herstellungsbedingungen ein Mindestspalt einzuhalten, beispielsweise 0,4 mm. Hinsichtlich einer optimalen Ausnutzung der Permanentmagnete, also eines möglichst großen magnetischen Flusses im Luftspalt, sollte der Spalt so klein wie möglich sein. Je kleiner der Luftspalt, desto stärker ausgeprägt ist jedoch das Nutrasten und damit eine eventuelle Geräuschentwicklung. Im Allgemeinen wird ein Optimum zwischen Nutrasten und Ausnutzung des magnetischen Flusses eingestellt. Erfindungsgemäß wurde dabei eine optimale Luftspaltlänge δ im Bereich von 0,5 bis 0,7 mm, insbesondere 0,6 mm gefunden.

Beim elektrischen Antriebsmotor der Erfindung wird das Blechpaket des Permanentmagnetenrotors vorzugsweise aus einem Stapel von mehreren Einzelblechen gebildet.

Der Permanentmagnetenrotor eines erfindungsgemäßen elektrischen Antriebsmotors kann verschieden ausgestaltet sein, wobei insbesondere zwei unterschiedliche Topologien verwendet werden.

Eine Topologie umfasst einen Rotor mit oberflächenmontierten Magneten. Hierbei wird im Allgemeinen ein geblechtes Rotorjoch auf eine Welle gepresst. Auf das Rotorjoch werden dann die Permanentmagnete montiert und in der Regel mit einer Bandage fixiert. Diese Topologie liegt in unterschiedlichen axialen Längen vor, wobei die Länge des Rotorjoches durch die Anzahl der vorzugsweise verwendeten Einzelbleche im Blechpaket bestimmt wird. Die Wellen sowie die Permanentmagnete sind in ihrer axialen Länge der jeweiligen Variante angepasst. Üblicherweise wird für das Rotorpaket die gleiche Anzahl Bleche verwendet wie für das Statorpaket, so dass ein zur Herstellung üblicherweise verwendeter Stanzprozess mit einer sehr geringen Menge an Verschnitt durchgeführt werden kann.

Die zweite, hierin bevorzugte, Topologie ist mit radial eingebetteten Permanentmagneten im sogenannten Spoke-Design ausgeführt. Dabei sind Permanentmagnete speichenförmig im Rotorpaket so angeordnet, dass ihre Magnetisierung tangential ausgerichtet ist. Dadurch wird der magnetische Fluss in den Polen bzw. Polschuhen gesammelt, so dass im Luftspalt höhere magnetische Flussdichten erreicht werden. Ein zusätzlicher Drehmomentanteil wird über den Reluktanzeffekt des Blechpaketes erzeugt. Diese zweite Topologie kann ohne weitere Änderungen in den Bauteilen im gleichen Stator betrieben werden wie die erste Topologie.

In einer ganz besonders bevorzugten Ausführungsform des erfindungsgemäßen elektrischen Antriebsmotors weist das Blechpaket daher zumindest eine der Anzahl von Polen des Permanentmagnetenrotors entsprechende Anzahl von Taschen auf, in denen in radialer Richtung jeweils ein Permanentmagnet angeordnet ist, die Permanentmagnete in Umfangsrichtung des Permanentmagnetenrotors mit abwechselnder Polung verteilt angeordnet und in tangentialer Richtung magnetisiert sind, so dass ein von dem jeweiligen Permanentmagneten ausgehender magnetischer Fluss in tangentialer Richtung des Permanentmagnetenrotors verläuft, wobei sich die Permanentmagneten in axialer Richtung des Permanentmagnetenrotors über das Blechpaket hinaus erstrecken, und wobei zwischen benachbarten Taschen jeweils ein Segment des Blechpaketes angeordnet ist, welches ausgebildet ist, den magnetischen Fluss der jeweiligen Permanentmagnete in dem Luftspalt zu konzentrieren.

Dabei ist es bevorzugt, dass das Blechpaket über jeweils einem Permanentmagneten auf der Seite des Luftspaltes einen sich in axialer Richtung des Permanentmagnetenrotors erstreckenden Stegteil bildet, der zwei Segmente des Blechpaketes miteinander verbindet. Darin ist es wiederum bevorzugt, dass der Stegteil Stegelemente und Stegausnehmungen aufweist.

In einer besonders bevorzugten Ausführungsform des erfindungsgemäßen elektrischen Antriebsmotors sind die Stegausnehmungen durch einen Stapel von geöffneten Einzelblechen und die Stegelemente durch geschlossene Einzelbleche gebildet. Dabei steht der Begriff "geöffnete Einzelbleche" für Einzelbleche mit offenen Taschenausschnitten und der Begriff "geschlossene Einzelbleche" für Einzelbleche mit durchgehendem Steg. Vorzugsweise liegt dabei der Anteil der geschlossenen Einzelbleche, bezogen auf die Summe von offenen und geschlossenen Einzelblechen, im Bereich von 5 bis 20 %, mehr bevorzugt im Bereich von 10 bis 15 %.

Im erfindungsgemäßen elektrischen Antriebsmotor ist vorzugsweise eine Federvorrichtung ausgebildet, um die in die Taschen eingesetzten Permanentmagnete jeweils in radialen Richtungen nach außen vorgespannt innerhalb der Taschen zu fixieren, wobei die Federvorrichtung gebildet wird von jeweils ein oder mehreren, in jeweils eine der Taschen hineinragenden elastischen Nasen und jede Tasche motorwellenfern eine Anschlagvorrichtung aufweist, die an dem Blechpaket festgelegt ist und gegen die der jeweils in eine der Taschen eingesetzte Permanentmagnet durch die ein oder mehreren Nasen der betreffenden Tasche federvorgespannt gedrückt wird. Hierbei ist es bevorzugt, dass das Blechpaket aus einem Stapel von Einzelblechen gebildet ist und die Federvorrichtung, insbesondere die ein oder mehreren elastischen Nasen, durch nach innen vorspringende Randabschnitte von Fensterausschnitten der Einzelbleche gebildet wird.

Vorzugsweise enthält das Blechpaket im erfindungsgemäßen elektrischen Antriebsmotor Einzelbleche, die als geschlossene Einzelbleche, d.h. Einzelbleche mit durchgehendem Steg ausgebildet sind, bei denen eine elastische Nase einer Federvorrichtung durch nach innen vorspringende Randabschnitte von Fensterausschnitten der Einzelbleche gebildet sind.

Zur optimalen Fixierung der Permanentmagnete sind im elektrischen Antriebsmotor vorzugsweise die in die Taschen des Blechpaketes eingesetzten Permanentmagnete durch Kunststoff umspritzt.

Die Außenkontur des Permanentmagnetenrotors kann verschiedene Formen aufweisen. Es hat sich allerdings gezeigt, dass ein besonders ruhig laufender elektrischer Antriebsmotor erhalten wird, wenn die Außenkontur des Permanentmagnetenrotors kreisförmig ist.

Es hat sich überdies als sehr vorteilhaft ergeben, dass die in die Taschen des Blechpaketes eingesetzten Permanentmagnete durch Kunststoff umspritzt sind. Vorteilhaft können dabei eine optional im elektrischen Antriebsmotor vorhandene Federvorrichtung bzw. die in ihr enthaltenen Zungen oder Nasen dazu dienen, die in die Taschen eingesetzten Permanentmagnete während der Fertigung und/oder der Montage des Permanentmagnetenrotors vorübergehend zu fixieren, wenn die in die Taschen eingesetzten Permanentmagneten durch ein Umspritzen des Blechpaketes mit einem Kunststoff durch den erhärteten Kunststoff endgültig in ihren Positionen fixiert werden. Eine solche nur vorübergehende Fixierung der in die Taschen eingesetzten Permanentmagnete durch die Federvorrichtung bzw. durch die Zungen verhindert, dass die Permanentmagnete in den Taschen verschoben werden oder sogar ganz herausfallen, wenn der Permanentmagnetenrotor, insbesondere das Blechpaket, während der Fertigung bewegt wird oder vor dem Umspritzen mit Kunststoff vorerwärmt wird, bevor der noch nicht umspritzte Permanentmagnetenrotor in die Spritzgießform eingesetzt wird. Auch kann die Federvorrichtung bzw. die darin eingesetzten Zungen oder Nasen verhindern, dass die in die Taschen eingesetzten Permanentmagnete während des Umspritzvorganges durch den flüssigen Kunststoffstrom verschoben werden. Die federvorspannende Wirkung der Federvorrichtung kann also gegebenenfalls nach einem Umspritzen mit Kunststoff wegfallen. Werden die Permanentmagnete nicht mit Kunststoff umspritzt, soll hingegen die federvorspannende Wirkung der Federvorrichtung stets erhalten bleiben, also nicht nur während der Herstellung und/oder des Zusammenbaues des Permanentmagnetenrotors, sondern auch während des Betriebes des elektrischen Antriebsmotors.

Gegenstand der Erfindung ist außerdem ein Haushaltsgerät, aufweisend einen hierin beschriebenen elektrischen Antriebsmotor. Dabei ist das Haushaltsgerät nicht eingeschränkt. Allerdings ist das Haushaltsgerät insbesondere eine Geschirrspülmaschine, eine Waschmaschine, ein Trockner, eine Dunstabzugshaube oder ein Staubsauger.

Gegenstand der Erfindung ist außerdem ein Verfahren zur Bestimmung eines elektrischen Antriebsmotors, der insbesondere für den Betrieb in einem Haushaltsgerät geeignet ist, mit einer Reduktion von Drehmomentschwankungen, die auf magnetische Ursachen zurückzuführen sind, wobei der elektrische Antriebsmotor einen Stator und einen Permanentmagnetenrotor enthält, der eine Motorwelle und ein auf der Motorwelle sitzendes Blechpaket aufweist, wobei Stator und Permanentmagnetenrotor durch einen Luftspalt voneinander getrennt sind, und wobei Stator und Permanentmagnetenrotor auf ihren dem Luftspalt zugewandten Oberflächen in Umfangsrichtung jeweils v, beispielsweise mit v gleich 48, voneinander gleich beabstandete Rastpositionen aufweisen, welche jeweils durch Vertiefungen in den Oberflächen realisiert sind, wobei die Anzahl v an Rastpositionen auch Nutschlitze umfasst, an denen keine Einkerbungen möglich sind, und die Vertiefungen kugelförmig oder konisch sind, umfassend die Schritte
(a) Ermittlung von Harmonischen in den Schwankungen des Drehmomentes beim Betreiben des elektrischen Antriebsmotors, die auf magnetische Ursachen zurückzuführen sind, für verschiedene Harmonische in Abhängigkeit vom Lastmoment L;
(b) Heraussuchen einer v-ten Harmonischen unter den in (a) ermittelten Harmonischen mit den größten Drehmomentschwankungen, die auf magnetische Ursachen zurückzuführen sind;
(c) Anbringen von v Rastpositionen auf dem Stator und dem Permanentmagnetenrotor mit einer Tiefe von jeweils d₁;
(d) Ermittlung der Drehmomentschwankungen bei der v-ten Harmonischen für den gemäß Merkmal (c) mit Rastpositionen versehenen elektrischen Antriebsmotor in Abhängigkeit vom Lastmoment L;
(e) Bestimmung des Lastmomentes Lₘₐₓ, bis zu dem eine Verringerung der v-ten Harmonischen erfolgt; und
(f) Sicherstellung, dass die weiteren Harmonischen hinsichtlich ihrer Amplitude H nicht derart beeinflusst werden, dass deren Amplitude H eine vorgegebene Zunahme ΔH > ΔH^{set} überschreitet und/oder die Ausnutzung A um einen Wert ΔA > ΔA^{set} abgenommen hat.

Durch die Tiefe d der Vertiefungen, insbesondere der Tiefe von konischen Einkerbungen, kann die Amplitude der Harmonischen, insbesondere der 48ten Harmonischen beeinflusst werden. Zur Bestimmung des elektrischen Antriebsmotors kann d variiert werden. Somit kann durch die Tiefe der Einkerbungen und die Position der Einkerbungen eine Optimierung dahingehend erreicht werden, dass die betreffende Harmonische möglichst weitgehend kompensiert wird, wobei je nach vorgegebener Anwendungssituation ein weitest möglicher Lastbereich oder zumindest ein relevanter Lastbereich eingestellt werden kann.

Die Bestimmung eines geeigneten elektrischen Antriebsmotors kann dabei so erfolgen, dass die vorgenannte Vorgehensweise auf verschiedene Motorordnungen übertragen werden kann. Hierbei ist zu beachten, dass die Ordnung im Drehmoment enthalten sein muss. Anregungen, z.B. durch radiale Kräfte zwischen Rotor und Stator, können auf diese Weise nicht beeinflusst werden. Vorzugsweise sollte überprüft werden, ob negative Auswirkungen auf andere Motorordnungen bestehen, insbesondere auf Vielfache der reduzierten Motorordnung. Generell sollte eine übermäßige Aufweitung des Luftspaltes durch möglicherweise zu große, d.h. insbesondere zu tiefe, Einkerbungen vermieden werden, denn sehr viele und/oder sehr tiefe Einkerbungen können zu einer signifikanten Reduzierung des Magnetflusses im Luftspalt und damit zu einer Reduzierung der Ausnutzung führen.

Schließlich ist Gegenstand der Erfindung auch ein Verfahren zum Betrieb eines elektrischen Antriebsmotors, der insbesondere für den Betrieb in einem Haushaltsgerät geeignet ist, enthaltend einen Stator und einen Permanentmagnetenrotor, der eine Motorwelle und ein auf der Motorwelle sitzendes Blechpaket aufweist, wobei Stator und Permanentmagnetenrotor durch einen Luftspalt voneinander getrennt sind, und wobei Stator und Permanentmagnetenrotor auf ihren dem Luftspalt zugewandten Oberflächen in Umfangsrichtung jeweils v voneinander gleich beabstandete Rastpositionen aufweisen, welche jeweils durch Vertiefungen in den Oberflächen realisiert sind, wobei die Anzahl v an Rastpositionen auch Nutschlitze umfasst, an denen keine Einkerbungen möglich sind, und die Vertiefungen kugelförmig oder konisch sind, wobei das Verfahren die folgenden Schritte aufweist:
(i) Ermittlung der Drehmomentschwankungen bei der v-ten Harmonischen für den elektrischen Antriebsmotor in Abhängigkeit vom Lastmoment L;
(ii) Bestimmung des Lastmomentes Lₘₐₓ, bis zu dem eine Verringerung der v-ten-Harmonischen erfolgt;
(iii) Sicherstellung, dass die weiteren Harmonischen hinsichtlich ihrer Amplitude H nicht derart beeinflusst werden, dass deren Amplitude H eine vorgegebene Zunahme ΔH > ΔH^{set} überschreitet und/oder die Ausnutzung A um einen Wert ΔA > ΔA^{set} abgenommen hat; und
(iv) Betreiben des elektrischen Antriebsmotors mit einem Lastmoment L ≤ Lₘₐₓ.

Die Erfindung hat zahlreiche Vorteile. So ermöglicht die Erfindung, bestimmte Frequenzanteile, d.h. Harmonische bzw. Ordnungen, des Motordrehmomentes bei Bedarf zu reduzieren. Damit können Geräuschanregungen und damit eine Geräuschentwicklung zielgerichtet vermindert werden. In Ausführungsformen der Erfindung [unter Einhaltung bestimmter Randbedingungen] ist dies möglich, ohne die Ausnutzung des Motors zu senken oder andere Ordnungen zu verstärken.

Der erfindungsgemäße elektrische Antriebsmotor kann mit sehr hoher Effizienz bei gleichzeitig verringerter Geräuschentwicklung betrieben werden, da Harmonische des Drehmomentes durch gezielt hervorgerufene gegenphasige Harmonische kompensiert werden können.

Weitere Einzelheiten der Erfindung ergeben sich aus der nachfolgenden Beschreibung von erfindungswesentlichen Komponenten eines erfindungsgemäßen elektrischen Antriebsmotors. Dabei wird Bezug genommen auf die Figuren 1 bis 6. Bestimmte einzelne Merkmale dieser Ausführungsbeispiele können unabhängig davon, in welchem konkreten Zusammenhang sie erwähnt sind, gegebenenfalls auch einzeln oder in anderen als den dargestellten Kombinationen betrachtet, allgemeine Merkmale der Erfindung darstellen.

Es zeigen:
Fig. 1 eine perspektivische Darstellung eines beispielhaften elektrischen Antriebsmotors, der insbesondere für ein Haushaltsgerät wie eine Waschmaschine geeignet ist;
Fig. 2 eine Schnittansicht auf Stator und Rotor eines erfindungsgemäßen elektrischen Antriebsmotors im Bereich eines Luftspaltes zwischen diesen, wobei Fig. 2 (b) eine vergrößerte Darstellung des Ausschnittes von Fig. 2 (a) ist;
Fig. 3 eine Schnittansicht auf Stator und Rotor eines erfindungsgemäßen elektrischen Antriebsmotors im Bereich eines Luftspaltes zwischen diesen, welche gegenüber den Darstellungen aus Fig. 2 noch stärker vergrößert ist;
Fig. 4 zeigt einen Vergleich der Messwerte für einen elektrischen Antriebsmotor gemäß der vorliegenden Erfindung und einen nicht erfindungsgemäßen elektrischen Antriebsmotor, wobei Fig. 4 (a) den Strombedarf in Abhängigkeit vom Lastmoment, Fig. 4(b) die Amplitude der 24ten Harmonischen und Fig. 4(c) die Amplitude der 48ten Harmonischen zeigt.
Fig. 5 einen Permanentmagnetenrotor mit Taschen für hier nicht gezeigte Permanentmagneten, wobei die erfindungsgemäß vorgesehenen Rastpositionen nicht angezeigt sind;
Fig. 6 eine geschnittene perspektivische Darstellung eines in einer Ausführungsform eines erfindungsgemäßen elektrischen Antriebsmotors eingesetzten Permanentmagnetenrotors mit einem Blechpaket und in Taschen des Blechpakets angeordneten Permanentmagneten, wobei die erfindungsgemäß vorgesehenen Rastpositionen nicht angezeigt sind.

Fig. 1 zeigt eine perspektivische Darstellung eines beispielhaften elektrischen Antriebsmotors 1, der insbesondere für ein Haushaltsgerät wie eine Waschmaschine geeignet ist. Der elektrische Antriebsmotor 1 weist in dieser Ausführungsform einen feststehenden Stator 2 und einen drehbar gelagerten Rotor 3 auf. 4 bedeutet eine Innenwelle.

Fig. 2 zeigt eine Schnittansicht auf Stator 2 und Permanentmagnetenrotor 3 eines ansonsten nicht näher gezeigten erfindungsgemäßen elektrischen Antriebsmotors im Bereich eines Luftspaltes 6 zwischen diesen, wobei Fig. 2 (b) eine vergrößerte Darstellung des Ausschnittes von Fig. 2 (a) ist. 9,10 bedeutet Rastpositionen, die hier als konische Vertiefungen ausgebildet sind.

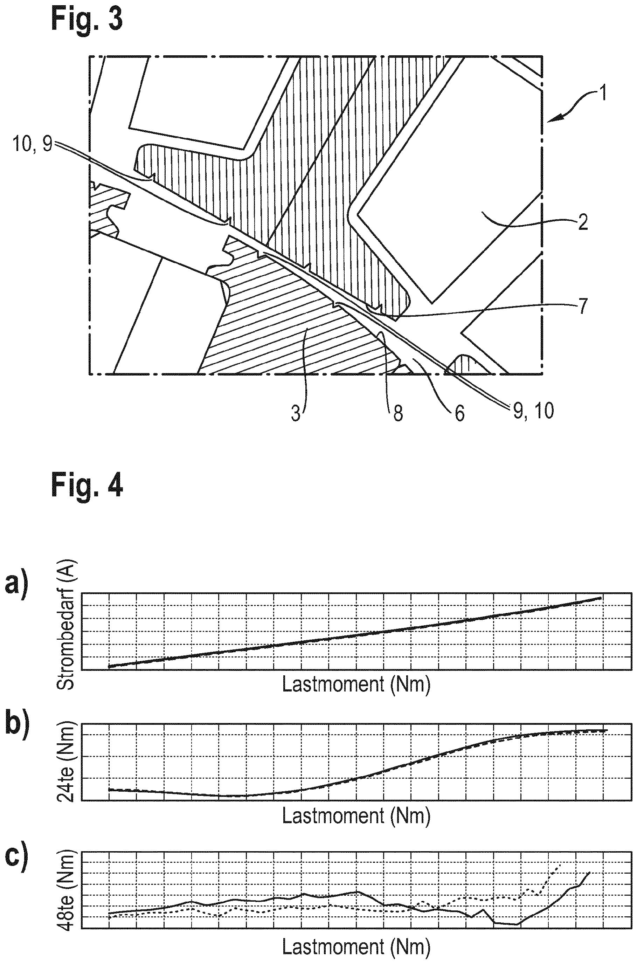

Fig. 3 zeigt eine Schnittansicht auf Stator 2 und Permanentmagnetenrotor eines ansonsten nicht näher gezeigten erfindungsgemäßen elektrischen Antriebsmotors im Bereich eines Luftspaltes 6 zwischen diesen. Die Darstellung ist gegenüber denen aus Fig. 2 noch stärker vergrößert. 9,10 bedeutet Rastpositionen, die hier als konische Vertiefungen ausgebildet sind. 7 bedeutet die dem Luftspalt 6 zugewandte Oberfläche des Stators 2 und 8 bedeutet die dem Luftspalt 6 zugewandte Oberfläche des Permanentmagnetenrotors 3.

Fig. 4 zeigt einen Vergleich der Messwerte für einen elektrischen Antriebsmotor gemäß der vorliegenden Erfindung (gestrichelte Linien) und einen nicht erfindungsgemäßen elektrischen Antriebsmotor (durchgezogene Linien), wobei Fig. 4 (a) den Strombedarf in Abhängigkeit vom Lastmoment, Fig. 4(b) die Amplitude der 24ten Harmonischen und Fig. 4(c) die Amplitude der 48ten Harmonischen zeigt. Der hierzu verwandte elektrische Antriebsmotor ist ein BLDC-Motor einer Waschmaschine, der als sog. Innenläufer mit eingebetteten Magneten, also radial angeordneten Permanentmagneten, ausgestaltet ist. Dieser BLDC-Motor regt verstärkt die 48. Motorordnung, d.h. die 48te Harmonische an. Diese tritt hauptsächlich als Vielfache der 24. Motorordnung auf, die aus dem Nutrastmoment und der reluktanzbedingten Drehmomentschwankung herrührt. In bestimmten Arbeitspunkten des Elektromotors trifft die 48. Motorordnung auf eine Resonanz des Gesamtsystems, so dass unerwünschte Geräusche entstehen. Die Ausprägung der Anregung ist dabei lastabhängig. Die Drehmomentschwankung insgesamt und die 48. Motorordnung im Speziellen steigen mit zunehmender Last an. Es ändern sich dabei auch die Phasenwinkel, was im Folgenden aber nicht weiter diskutiert wird. Die 48. Motorordnung verschiebt sich also lastabhängig. Dies ist im Wesentlichen auf den Einfluss des Statorfeldes zurückzuführen, welches das magnetische Feld im Luftspalt mit zunehmender Last, d.h. Lastmoment, immer stärker beeinflusst und zum anderen die Sättigungsverhältnisse verändert und damit die Reluktanz.

Fig. 4(a) illustriert, dass die erfindungsgemäß vorgesehene Anbringung von Rastpositionen nicht zu einer verminderten Ausnutzung des elektrischen Antriebsmotors führt.

Fig. 4(b) illustriert, dass die erfindungsgemäß vorgesehene Anbringung von Rastpositionen nahezu keinen Einfluss auf die Amplitude der 24ten Harmonischen hat.

Fig. 4(c) illustriert, dass die erfindungsgemäß vorgesehene Anbringung von Rastpositionen bis zu einem bestimmten maximalen Wert des Lastmomentes L zu einer deutlichen Reduktion der Amplitude der 48. Motorordnung führt. Die 48te Harmonische, hierin auch als 48. Motorordnung bezeichnet, zeigte hier bis zu einem Lastmomentwert von 1,2 Nm reduzierte Amplituden. Aus elektromagnetischer Sicht wird also eine Verbesserung ohne nachteilige Auswertung auf Ausnutzung oder andere relevante Harmonische erreicht. Damit die 48. Motorordnung hier reduziert werden konnte, wurde durch die erfindungsgemäß ergriffene Maßnahme ein erzwungener Drehmomentanteil in Gegenphase zum mittleren Winkel der 48. Motorordnung eingeprägt.

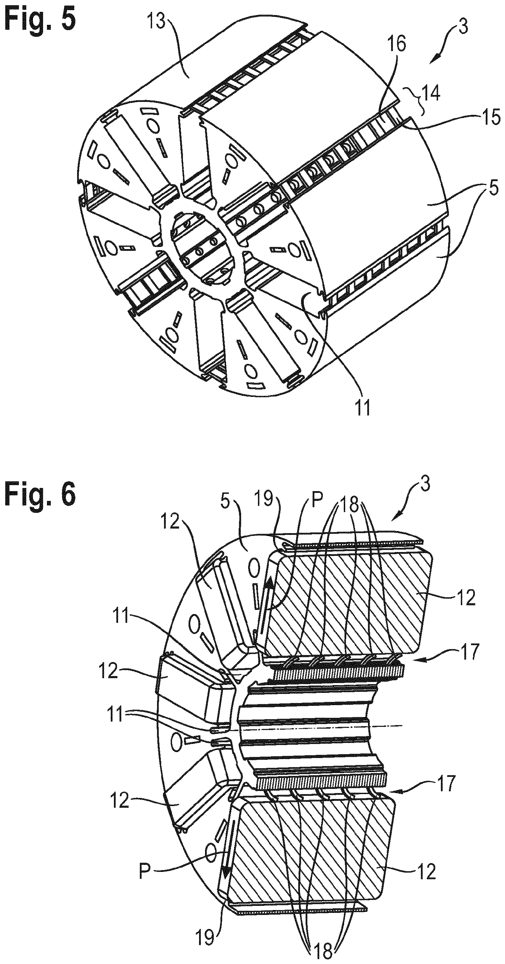

Fig. 5 zeigt einen Permanentmagnetenrotor 3, wie er in einer bevorzugten, aber nicht einschränkenden Ausführungsform des erfindungsgemäßen elektrischen Antriebsmotors zum Einsatz kommt, mit Taschen 11 für hier nicht gezeigte Permanentmagneten, wobei die erfindungsgemäß vorgesehenen Rastpositionen ebenfalls nicht angezeigt sind. 5 steht hier für die Blechpakete des Rotors 3. In radialer Richtung ist am Ende der Taschen 11 jeweils ein Stegteil 14 angeordnet. Der Stegteil 14 enthält Stegelemente 15, die aus dem gleichen Material bestehen wie die Blechpakete 5 und insbesondere der Stabilität des Permanentmagnetenrotors 3 dienen. Zwischen den Stegelementen 15 befinden sich Stegausnehmungen 16. 13 bedeutet ein Segment des Rotors.

Fig. 6 zeigt eine geschnittene perspektivische Darstellung eines in einer Ausführungsform eines erfindungsgemäßen elektrischen Antriebsmotors eingesetzten Permanentmagnetenrotors 3 mit einem Blechpaket 5 und in Taschen 11 des Blechpakets angeordneten Permanentmagneten 12, wobei die erfindungsgemäß vorgesehenen Rastpositionen nicht angezeigt sind. Der Permanentmagnetenrotor 3 weist hier mehrere Pole, insbesondere acht Pole auf. Jedem Permanentmagneten 12 des Permanentmagnetenrotors 3 ist eine Tasche 11 im Blechpaket 5 zugeordnet.

In jeweils einer der Taschen 11 ist ein einzelner Permanentmagnet 12 eingesetzt und darin insbesondere gegen Verrutschen fixiert. Bei der hier gezeigten Ausführungsform sind alle Permanentmagnete 12 des Permanentmagnetenrotors 3 identisch ausgebildet, wobei sie hier jeweils eine quaderförmige Gestalt aufweisen. Die Permanentmagnete 12 sind über den Umfang des Permanentmagnetenrotors 3 gleichmäßig verteilt angeordnet.

Jede Tasche 11 kann eine der Gestalt der Permanentmagnete 6 entsprechende Form aufweisen, wobei die Tasche 11 geringfügig größer ausgebildet ist, so dass jeweils ein einzelner Permanentmagnet 12 in eine Tasche 11 eingefügt werden kann. Das Blechpaket 5 des Permanentmagnetenrotors 3 wird hier von mehreren, insbesondere gestanzten Blechzuschnitten gebildet, welche hier nicht näher ersichtlich deckungsgleich übereinander gestapelt und zu einem kompakten Paket miteinander verbunden sind. Das Blechpaket 5 kann insoweit durch eine Stanzpacketierung hergestellt sein. Die deckungsgleich übereinander gestapelten Einzelbleche können beispielsweise durch Schweißen, Nieten, Klammern oder eine Stanz- bzw. Klebepacketierung verbunden sein.

Der hier gezeigte Permanentmagnetenrotor 3 weist eine Federvorrichtung 17 auf, die ausgebildet ist, die in die Taschen 11 eingesetzten Permanentmagnete 12 jeweils in radialen Richtungen nach außen vorgespannt, wie in Fig. 6 durch Pfeile P angedeutet, innerhalb der Taschen 11 zu fixieren. Die Federvorrichtung 17 kann prinzipiell aus einem Teil, aber auch aus mehreren Teilen gebildet sein. Die Federvorrichtung 17 spannt jeden einzelnen Permanentmagneten 12 innerhalb seiner jeweiligen Tasche 11 in eine radial möglichst weit außen liegende Position. Dabei kann der Permanentmagnetenrotor 3 an jeder Tasche 11 eine radial möglichst weit außen liegende Anschlagsvorrichtung 19 aufweisen, gegen die der jeweilige in seiner Tasche 11 liegende Permanentmagnet 12 durch die Federvorrichtung 17 gedrückt wird. Alle Anschlagsvorrichtungen 18 liegen vorzugsweise auf demselben Radius, so dass sämtliche Permanentmagnete 12 durch die Federvorrichtung 17 auf denselben äußeren Radius positioniert werden. Damit kann sichergestellt werden, dass alle Permanentmagnete 12, d.h. alle Pole des Permanentmagnetenrotors 3, dieselbe magnetische Wirkung im Ringspalt des elektrischen Antriebsmotors der Erfindung erzeugen.

### Bezugszeichen

- 1: Elektrischer Antriebsmotor
- 2: Stator
- 3: Permanentmagnetenrotor
- 4: Motorwelle
- 5: Blechpaket
- 6: Luftspalt (zwischen Stator und Rotor)
- 7: dem Luftspalt zugewandte Oberfläche des Stators
- 8: dem Luftspalt zugewandte Oberfläche des Permanentmagnetenrotors
- 9: Rastpositionen
- 10: Vertiefungen, konische Vertiefungen, in den Oberflächen
- 11: Taschen
- 12: Permanentmagnete
- 13: Segment
- 14: Stegteil, Stegbereich
- 15: Stegelement
- 16: Stegausnehmungen
- 17: Federvorrichtung
- 18: Nasen, Zungen
- 19: Anschlagvorrichtung

## Patentansprüche

1. Elektrischer Antriebsmotor (1), enthaltend einen Stator (2) und einen Permanentmagnetenrotor (3), der eine Motorwelle (4) und ein auf der Motorwelle (4) sitzendes Blechpaket (5) aufweist, wobei Stator (2) und Permanentmagnetenrotor (3) durch einen Luftspalt (6) voneinander getrennt sind, wobei Stator (2) und Permanentmagnetenrotor (3) auf ihren dem Luftspalt (6) zugewandten Oberflächen (7,8) in Umfangsrichtung jeweils v voneinander gleich beabstandete Rastpositionen (9) aufweisen, welche jeweils durch Vertiefungen (10) in den Oberflächen (7,8) realisiert sind, wobei die Anzahl v an Rastpositionen auch Nutschlitze umfasst, an denen keine Einkerbungen möglich sind, **dadurch gekennzeichnet, dass** die Vertiefungen (10) kugelförmig oder konisch sind.

2. Elektrischer Antriebsmotor (1) nach Anspruch 1, **dadurch gekennzeichnet, dass** die Rastpositionen (9) konische Vertiefungen (10) sind.

3. Elektrischer Antriebsmotor (1) nach einem der Ansprüche 1 bis 2, **dadurch gekennzeichnet, dass** der Elektromotor ein bürstenloser, asynchroner Gleichstrommotor ist.

4. Elektrischer Antriebsmotor (1) nach einem der Ansprüche 1 bis 3, **dadurch gekennzeichnet, dass** v gleich 48 ist, so dass die Rastpositionen (9) entlang eines im Wesentlichen kreisförmigen Perimeters der Oberflächen (7,8) im Abstand von 7,5° eingebracht sind.

5. Elektrischer Antriebsmotor (1) nach Anspruch 4, **dadurch gekennzeichnet, dass** das Blechpaket (5) zumindest eine der Anzahl von Polen des Permanentmagnetenrotors (3) entsprechende Anzahl von Taschen (11) aufweist, in denen in radialer Richtung jeweils ein Permanentmagnet (12) angeordnet ist, die Permanentmagnete (12) in Umfangsrichtung des Permanentmagnetenrotors (3) mit abwechselnder Polung verteilt angeordnet und in tangentialer Richtung magnetisiert sind, so dass ein von dem jeweiligen Permanentmagneten (12) ausgehender magnetischer Fluss in tangentialer Richtung des Permanentmagnetenrotors (3) verläuft, und sich die Permanentmagneten (12) in axialer Richtung des Permanentmagnetenrotors (3) ' über das Blechpaket (5) hinaus erstrecken, und wobei zwischen benachbarten Taschen (11) jeweils ein Segment (13) des Blechpaketes (5) angeordnet ist, welches ausgebildet ist, den magnetischen Fluss der jeweiligen Permanentmagnete (12) in dem Luftspalt (6) zu konzentrieren.

6. Elektrischer Antriebsmotor (1) nach Anspruch 5, **dadurch gekennzeichnet, dass** das Blechpaket (5) über jeweils einem Permanentmagneten (11) auf der Seite des Luftspaltes (6) einen sich in axialer Richtung des Permanentmagnetenrotors (3) erstreckenden Stegteil (14) bildet, der zwei Segmente (13) des Blechpaketes (5) miteinander verbindet.

7. Elektrischer Antriebsmotor (1) nach Anspruch 6, **dadurch gekennzeichnet, dass** der Stegteil (14) Stegelemente (15) und Stegausnehmungen (16) aufweist.

8. Elektrischer Antriebsmotor (1) nach einem der Ansprüche 1 bis 7, **dadurch gekennzeichnet, dass** das Blechpaket (5) des Permanentmagnetenrotors (3) aus einem Stapel von mehreren Einzelblechen gebildet wird.

9. Elektrischer Antriebsmotor (1) nach einem der Ansprüche 5 bis 8, **dadurch gekennzeichnet, dass** eine Federvorrichtung (17) ausgebildet ist, um die in die Taschen (11) eingesetzten Permanentmagnete (12) jeweils in radialen Richtungen nach außen vorgespannt innerhalb der Taschen (11) zu fixieren, wobei die Federvorrichtung (17) gebildet wird von jeweils ein oder mehreren, in jeweils eine der Taschen (11) hineinragenden elastischen Nasen (18) und jede Tasche (11) motorwellenfern eine Anschlagvorrichtung (19) aufweist, die an dem Blechpaket (5) festgelegt ist und gegen die der jeweils in eine der Taschen (11) eingesetzte Permanentmagnet (12) durch die ein oder mehreren Nasen (18) der betreffenden Tasche (11) federvorgespannt gedrückt wird.

10. Elektrischer Antriebsmotor (1) nach Anspruch 9, **dadurch gekennzeichnet, dass** das Blechpaket (5) aus einem Stapel von Einzelblechen gebildet ist und die Federvorrichtung (17), insbesondere die ein oder mehreren elastischen Nasen (18), durch nach innen vorspringende Randabschnitte von Fensterausschnitten der Einzelbleche gebildet werden.

11. Elektrischer Antriebsmotor (1) nach einem der Ansprüche 5 bis 10, **dadurch gekennzeichnet, dass** die in die Taschen (11) des Blechpaketes (5) eingesetzten Permanentmagnete (12) durch Kunststoff umspritzt sind.

12. Haushaltsgerät, insbesondere Geschirrspülmaschine, Waschmaschine, Trockner Dunstabzugshaube oder Staubsauger, aufweisend einen elektrischen Antriebsmotor (1) nach einem der Ansprüche 1 bis 11.

13. Verfahren zur Bestimmung eines elektrischen Antriebsmotors (1), der insbesondere für den Betrieb in einem Haushaltsgerät geeignet ist, mit einer Reduktion von Drehmomentschwankungen, die auf magnetische Ursachen zurückzuführen sind, wobei der elektrische Antriebsmotor (1) einen Stator (2) und einen Permanentmagnetenrotor (3) enthält, der eine Motorwelle (4) und ein auf der Motorwelle (4) sitzendes Blechpaket (5) aufweist, wobei Stator (2) und Permanentmagnetenrotor (3) durch einen Luftspalt (6) voneinander getrennt sind, und wobei Stator (2) und Permanentmagnetenrotor (3) auf ihren dem Luftspalt (6) zugewandten Oberflächen (7,8) jeweils in Umfangsrichtung v voneinander gleich beabstandete Rastpositionen (9) aufweisen, welche jeweils durchVertiefungen (10) in den Oberflächen (7,8) realisiert sind, wobei die Anzahl v an Rastpositionen auch Nutschlitze umfasst, an denen keine Einkerbungen möglich sind, und die Vertiefungen (10) kugelförmig oder konisch sind, umfassend die Schritte
(a) Ermittlung von Harmonischen in den Schwankungen des Drehmomentes beim Betreiben des elektrischen Antriebsmotors (1), die auf magnetische Ursachen zurückzuführen sind, für verschiedene Harmonische in Abhängigkeit vom Lastmoment L;
(b) Heraussuchen einer v-ten Harmonischen unter den in (a) ermittelten Harmonischen mit den größten Drehmomentschwankungen, die auf magnetische Ursachen zurückzuführen sind;
(c) Anbringen von v Rastpositionen (9) auf dem Stator (2) und dem Permanentmagnetenrotor (3) mit einer Tiefe von jeweils d₁;
(d) Ermittlung der Drehmomentschwankungen bei der v-ten Harmonischen für den gemäß Merkmal (c) mit Rastpositionen (9) versehenen elektrischen Antriebsmotor (1) in Abhängigkeit vom Lastmoment L;
(e) Bestimmung des Lastmomentes Lₘₐₓ, bis zu dem eine Verringerung der v-ten Harmonischen erfolgt; und
(f) Sicherstellung, dass die weiteren Harmonischen hinsichtlich ihrer Amplitude H nicht derart beeinflusst werden, dass deren Amplitude H eine vorgegebene Zunahme ΔH > ΔH^{set} überschreitet und/oder die Ausnutzung A um einen Wert ΔA > ΔA^{set} abgenommen hat.

14. Verfahren zum Betrieb eines elektrischen Antriebsmotors (1), der insbesondere für den Betrieb in einem Haushaltsgerät geeignet ist, enthaltend einen Stator (2) und einen Permanentmagnetenrotor (3), der eine Motorwelle (4) und ein auf der Motorwelle (4) sitzendes Blechpaket (5) aufweist, wobei Stator (2) und Permanentmagnetenrotor (3) durch einen Luftspalt (6) voneinander getrennt sind, und wobei Stator (2) und Permanentmagnetenrotor (3) auf ihren dem Luftspalt (6) zugewandten Oberflächen (7,8) jeweils in Umfangsrichtung v voneinander gleich beabstandete Rastpositionen (9) aufweisen, welche jeweils durch Vertiefungen (10) in den Oberflächen (7,8) realisiert sind, wobei die Anzahl v an Rastpositionen auch Nutschlitze umfasst, an denen keine Einkerbungen möglich sind, und die Vertiefungen (10) kugelförmig oder konisch sind, welches folgenden Schritte aufweist:
(i) Ermittlung der Drehmomentschwankungen bei der v-ten Harmonischen für den elektrischen Antriebsmotor (1) in Abhängigkeit vom Lastmoment L;
(ii) Bestimmung des Lastmomentes Lₘₐₓ, bis zu dem eine Verringerung der v-ten Harmonischen erfolgt;
(iii) Sicherstellung, dass die weiteren Harmonischen hinsichtlich ihrer Amplitude H nicht derart beeinflusst werden, dass deren Amplitude H eine vorgegebene Zunahme ΔH > ΔH^{set} überschreitet und/oder die Ausnutzung A um einen Wert ΔA > ΔA^{set} abgenommen hat; und
(iv) Betreiben des elektrischen Antriebsmotors (1) mit einem Lastmoment L ≤ Lₘₐₓ.

## Claims

1. Electric drive motor (1), containing a stator (2) and a permanent magnet rotor (3) which has a motor shaft (4) and a laminated core (5) positioned on the motor shaft (4), wherein the stator (2) and permanent magnet rotor (3) are separated from one another by means of an air gap (6), wherein on their surfaces (7, 8) facing the air gap (6) the stator (2) and permanent magnet rotor (3) have locking positions (9) equidistant from one another in the peripheral direction v in each case, which locking positions are realised in each case by depressions (10) in the surfaces (7, 8), wherein the number v of locking positions also comprises groove slits, on which no indentations are possible, **characterised in that** the depressions (10) are spherical or conical.

2. Electric drive motor (1) according to claim 1, **characterised in that** the locking positions (9) are conical depressions (10).

3. Electric drive motor (1) according to one of claims 1 to 2, **characterised in that** the electric motor is a brushless, asynchronous DC motor.

4. Electric drive motor (1) according to one of claims 1 to 3, **characterised in that** v is equal to 48 so that the locking positions (9) are introduced along an essentially circular perimeter of the surfaces (7, 8) at a distance of 7.5°.

5. Electric drive motor (1) according to claim 4, **characterised in that** the laminated core (5) has at least a number of pockets (11) which corresponds to the number of poles of the permanent magnet rotor (3), in which a permanent magnet (12) is arranged in each case in the radial direction, the permanent magnets (12) are arranged distributed with alternate polarity in the peripheral direction of the permanent magnet rotor (3) and are magnetised in the tangential direction so that a magnetic flux coming from the respective permanent magnet (12) runs in the tangential direction of the permanent magnet rotor (3) and the permanent magnets (12) extend in the axial direction of the permanent magnet rotor (3) beyond the laminated core (5), and wherein a segment (13) of the laminated core (5) is arranged between adjacent pockets (11) in each case and is embodied to concentrate the magnetic flux of the respective permanent magnets (12) in the air gap (6).

6. Electric drive motor (1) according to claim 5, **characterised in that** the laminated core (5) forms a web part (14) extending in the axial direction of the permanent magnet rotor (3) across in each case a permanent magnet (11) on the side of the air gap (6), said web part connecting two segments (13) of the laminated core (5) to one another.

7. Electric drive motor (1) according to claim 6, **characterised in that** the web part (14) has web elements (15) and web cut-outs (16).

8. Electric drive motor (1) according to one of claims 1 to 7, **characterised in that** the laminated core (5) of the permanent magnet rotor (3) is formed from a stack of several individual sheets.

9. Electric drive motor (1) according to one of claims 5 to 8, **characterised in that** a spring device (17) is embodied for fixing the permanent magnets (12) inserted into the pockets (11) in each case in radial directions outwardly prestressed within the pockets (11), wherein the spring device (17) is formed by in each case one or more elastic lugs (18) projecting into one of the pockets (11) in each case and each pocket (11) has a stop device (19) which is remote from the motor shaft and is fixed to the laminated core (5) and is pressed in a spring preloaded manner against the permanent magnet (12) inserted in each case into one of the pockets (11) by means of the one or more lugs (18) of the relevant pocket (11).

10. Electric drive motor (1) according to claim 9, **characterised in that** the laminated core (5) is formed of a stack of individual sheets and the spring device (17), in particular the one or more elastic lugs (18), are formed by inwardly projecting edge sections of window cut-outs of the individual sheets.

11. Electric drive motor (1) according to one of claims 5 to 10, **characterised in that** the permanent magnets (12) inserted into the pockets (11) of the laminated core (5) are overmoulded with plastic.

12. Household appliance, in particular dishwasher, washing machine, dryer, extractor hood or vacuum cleaner, having an electric drive motor (1) according to one of claims 1 to 11.

13. Method for determining an electric drive motor (1), which is suited in particular for operation in a household appliance, with a reduction in torque fluctuations which are to be attributed to magnetic causes, wherein the electric drive motor (1) contains a stator (2) and a permanent magnet rotor (3) which has a motor shaft (4) and a laminated core (5) positioned on the motor shaft (4), wherein the stator (2) and permanent magnet rotor (3) are separated from one another by means of an air gap (6), and wherein on their surfaces (7, 8) facing the air gap (6) the stator (2) and permanent magnet rotor (3) have locking positions (9) which are equidistant from one another in the peripheral direction v in each case and which are in each case realised by depressions (10) in the surfaces (7, 8), wherein the number v of locking positions also comprises groove slits, on which no indentations are possible and the depressions (10) are spherical or conical, comprising the steps
(a) determining harmonic components in the fluctuations in the torque, which are to be attributed to magnetic causes, while the electric drive motor (1) is in operation, for various harmonic components as a function of the load torque L;
(b) selecting a v'th harmonic component from the harmonic components with the largest torque fluctuations determined in (a) and which are to be attributed to magnetic causes;
(c) attaching v locking positions (9) to the stator (2) and the permanent magnet rotor (3) with a depth of in each case d₁;
(d) determining the torque fluctuations in the v'th harmonic components for the electric drive motor (1) provided with locking positions (9) according to feature (c) as a function of the load torque L;
(e) determining the load torque Lₘₐₓ until there is a reduction in the v'th harmonic component; and
(f) ensuring that the further harmonic components are not influenced with respect to their amplitude H in that their amplitude H exceeds a predetermined increase ΔH>ΔH^{set} and/or has reduced the utilisation A by a value ΔA>ΔA^{set}.

14. Method for operating an electric drive motor (1), which is suited in particular to operation in a household appliance, containing a stator (2) and a permanent magnet rotor (3), which has a motor shaft (4) and a laminated core (5) positioned on the motor shaft (4), wherein the stator (2) and permanent magnet rotor (3) are separated from one another by means of an air gap (6), and wherein on their surfaces (7, 8) facing the air gap (6) the stator (2) and permanent magnet rotor (3) have locking positions (9) which are equidistant from one another in the peripheral direction v in each case and which are in each case realised by depressions (10) in the surfaces (7, 8), wherein the number v of locking positions also comprises groove slits, on which no indentations are possible and the depressions (10) are spherical or conical, which has the following steps:
(i) determining the torque fluctuations in the v'th harmonic components for the electric drive motor (1) as a function of the load torque L;
(ii) determining the load torque Lₘₐₓ until there is a reduction in the v'th harmonic component;
(iii) ensuring that the further harmonic components are not influenced with respect to their amplitude H in that their amplitude H exceeds a predetermined increase ΔH>ΔH^{set} and/or has reduced the utilisation A by a value ΔA>ΔA^{set} ; and
(iv) operating the electric drive motor (1) with a load torque L ≤ Lₘₐₓ.

## Revendications

1. Moteur d'entraînement électrique (1), comprenant un stator (2) et un rotor à aimants permanents (3), lequel comprend un arbre moteur (4) et un empilage de tôles (5) placé sur l'arbre moteur (4), dans lequel le stator (2) et le rotor à aimants permanents (3) sont séparés l'un de l'autre par un entrefer (6), dans lequel le stator (2) et le rotor à aimants permanents (3) présentent sur leurs surfaces (7, 8) tournées vers l'entrefer (6) respectivement v positions d'enclenchement (9) distancées les unes des autres de manière identique en direction circonférentielle, lesquelles sont respectivement réalisées par des approfondissements (10) dans les surfaces (7, 8), dans lequel le nombre v de positions d'enclenchement comprend également des fentes rainurées sur lesquelles des encoches ne sont pas possibles, **caractérisé en ce que** les approfondissements (10) sont sphériques ou coniques.

2. Moteur d'entraînement électrique (1) selon la revendication 1, **caractérisé en ce que** les positions d'enclenchement (9) sont des approfondissements (10) coniques.

3. Moteur d'entraînement électrique (1) selon l'une quelconque des revendications 1 à 2, **caractérisé en ce que** le moteur électrique est un moteur à courant continu asynchrone sans balais.

4. Moteur d'entraînement électrique (1) selon l'une quelconque des revendications 1 à 3, **caractérisé en ce que** v est égal à 48 de sorte que les positions d'enclenchement (9) sont placées le long d'un périmètre essentiellement circulaire des surfaces (7,8) à écart de 7,5°.

5. Moteur d'entraînement électrique (1) selon la revendication 4, **caractérisé en ce que** l'empilage de tôles (5) comprend au moins un nombre de poches (11) correspondant au nombre de pôles du rotor à aimants permanents (3), dans lesquelles un aimant permanent (12) est respectivement disposé en direction radiale, **en ce que** les aimants permanents (12) sont disposés en direction circonférentielle du rotor à aimants permanents (3) en étant répartis avec polarité alternante et sont magnétisés en direction tangentielle, de sorte qu'un flux magnétique partant de l'aimant permanent (12) respectif s'étend en direction tangentielle du rotor à aimants permanents (3) et que les aimants permanents (12) s'étendent au-delà de l'empilage de tôles (5) en direction axiale du rotor à aimants permanents (3), et dans lequel un segment (13) de l'empilage de tôles (5) est respectivement disposé entre des poches (11) avoisinantes, lequel est réalisé pour concentrer le flux magnétique des aimants permanents (12) respectifs dans l'entrefer (6).

6. Moteur d'entraînement électrique (1) selon la revendication 5, **caractérisé en ce que** l'empilage de tôles (5), par l'intermédiaire de respectivement un aimant permanent (11) sur le côté de l'entrefer (6), forme une pièce d'entretoise (14) s'étendant en direction axiale du rotor à aimants permanents (3), laquelle relie entre eux deux segments (13) de l'empilage de tôles (5).

7. Moteur d'entraînement électrique (1) selon la revendication 6, **caractérisé en ce que** la pièce d'entretoise (14) comprend des éléments d'entretoise (15) et des évidements d'entretoise (16).

8. Moteur d'entraînement électrique (1) selon l'une quelconque des revendications 1 à 7, **caractérisé en ce que** l'empilage de tôles (5) du rotor à aimants permanents (3) est formé à partir d'une pile de plusieurs tôles individuelles.

9. Moteur d'entraînement électrique (1) selon l'une quelconque des revendications 5 à 8, **caractérisé en ce qu'**un dispositif à ressort (17) est réalisé afin de fixer à l'intérieur des poches (11) les aimants permanents (12) insérés dans les poches (11) respectivement dans des directions axiales en étant précontraints vers l'extérieur, dans lequel le dispositif à ressort (17) est formé par respectivement un ou plusieurs ergots (18) élastiques faisant saillie dans respectivement l'une des poches (11), et dans lequel chaque poche (11) comprend un dispositif de butée (19) éloigné de l'arbre moteur, lequel dispositif de butée est fixé sur l'empilage de tôles (5) et contre lequel l'aimant permanent (12) respectivement inséré dans l'une des poches (11) est pressé par l'un ou les plusieurs ergots (18) de la poche (11) correspondante en étant précontraint par ressort.

10. Moteur d'entraînement électrique (1) selon la revendication 9, **caractérisé en ce que** l'empilage de tôles (5) est formé par une pile de tôles individuelles et **en ce que** le dispositif à ressort (17), notamment l'un ou les plusieurs ergots (18) élastiques, est formé par des sections de bord, faisant saillie vers l'intérieur, de surfaces de fenêtres des tôles individuelles.

11. Moteur d'entraînement électrique (1) selon l'une quelconque des revendications 5 à 10, **caractérisé en ce que** les aimants permanents (12) insérés dans les poches (11) de l'empilage de tôles (5) sont surmoulés par de la matière plastique.

12. Appareil ménager, notamment lave-vaisselle, lave-linge, sèche-linge, hotte aspirante ou aspirateur, présentant un moteur d'entraînement électrique (1) selon l'une quelconque des revendications 1 à 11.

13. Procédé de détermination d'un moteur d'entraînement électrique (1) qui est notamment apte au fonctionnement dans un appareil ménager, comprenant une réduction de variations du couple de rotation qui sont dues à des origines magnétiques, dans lequel le moteur d'entraînement électrique (1) comprend un stator (2) et un rotor à aimants permanents (3), lequel comprend un arbre moteur (4) et un empilage de tôles (5) placé sur l'arbre moteur (4), dans lequel le stator (2) et le rotor à aimants permanents (3) sont séparés l'un de l'autre par un entrefer (6), et dans lequel le stator (2) et le rotor à aimants permanents (3) présentent sur leurs surfaces (7, 8) tournées vers l'entrefer (6) respectivement v positions d'enclenchement (9) distancées les unes des autres de manière identique en direction circonférentielle, lesquelles sont respectivement réalisées par des approfondissements (10) dans les surfaces (7, 8), dans lequel le nombre v de positions d'enclenchement comprend également des fentes rainurées sur lesquelles des encoches ne sont pas possibles, et dans lequel les approfondissements (10) sont sphériques ou coniques, comprenant les étapes
(a) détermination d'harmoniques dans les variations du couple de rotation lors du fonctionnement du moteur d'entraînement électrique (1), lesquelles sont d'origine magnétique, pour différentes harmoniques en fonction du moment de charge L ;
(b) recherche d'une v-nième harmonique parmi les harmoniques déterminées sous (a) ayant les plus grandes variations du couple de rotation, lesquelles sont d'origine magnétique ;
(c) placement de v positions d'enclenchement (9) sur le stator (9) et le rotor à aimants permanents (3) avec une profondeur de respectivement d₁ ;
(d) détermination des variations du couple de rotation dans la v-nième harmonique pour le moteur d'entraînement électrique (1) muni de positions d'enclenchement (9) selon le critère (c), en fonction du moment de charge L ;
(e) détermination du moment de charge Lₘₐₓ jusqu'à ce qu'une diminution de la v-nième harmonique ait lieu ; et
(f) assurance que les autres harmoniques ne soient pas influencées au regard de leur amplitude H de sorte que leur amplitude H dépasse une augmentation prédéfinie ΔH > ΔH^{set} et/ou que l'utilisation A ait diminué d'une valeur ΔA > ΔA^{set}.

14. Procédé de détermination d'un moteur d'entraînement électrique (1) qui est notamment apte au fonctionnement dans un appareil ménager, comprenant un stator (2) et un rotor à aimants permanents (3), lequel comprend un arbre moteur (4) et un empilage de tôles (5) placé sur l'arbre moteur (4), dans lequel le stator (2) et le rotor à aimants permanents (3) sont séparés l'un de l'autre par un entrefer (6), et dans lequel le stator (2) et le rotor à aimants permanents (3) présentent sur leurs surfaces (7, 8) tournées vers l'entrefer (6) respectivement v positions d'enclenchement (9) distancées les unes des autres de manière identique en direction circonférentielle, lesquelles sont respectivement réalisées par des approfondissements (10) dans les surfaces (7, 8), dans lequel le nombre v de positions d'enclenchement comprend également des fentes rainurées sur lesquelles des encoches ne sont pas possibles, et dans lequel les approfondissements (10) sont sphériques ou coniques, lequel procédé comprend les étapes suivantes :
(i) détermination des variations du couple de rotation dans la v-nième harmonique pour le moteur d'entraînement électrique (1) en fonction du moment de charge L;
(ii) détermination du moment de charge Lₘₐₓ jusqu'à ce qu'une diminution de la v-nième harmonique ait lieu ;
(iii) assurance que les autres harmoniques ne soient pas influencées au regard de leur amplitude H de sorte que leur amplitude H dépasse une augmentation prédéfinie ΔH >ΔH^{set} et/ou que l'utilisation A ait diminué d'une valeur ΔA >ΔA^{set} ; et
(iv) fonctionnement du moteur d'entraînement électrique (1) avec un moment de charge L ≤ L^{max}.
